# EUROPEAN PATENT APPLICATION

(11) **EP 2 884 702 A1**
(43) Date of publication of application: **17.06.2015**
(21) Application number: 13306700.9
(22) Date of filing: 11.12.2013
(51) Int. Cl.: H04L 12/58

(54) **Method of sending email, and email device therefor**

(71) Applicant: ALCATEL LUCENT, 92100 Boulogne-Billancourt (FR)
(72) Inventor: Trefcon, Michel, 35000 RENNES (FR); Morvan, Daniel, 35000 RENNES (FR)
(74) Representative: Raets, David

(57) **Abstract**

Method of sending an email message in an email processing application with which are registered at least two email accounts, comprising the steps of receiving recipient identifiers to which will be addressed said email message; determining one of said email accounts as a sending account in function of said entered recipient identifiers; and sending said email message with said sending account.

## Description

### TECHNICAL FIELD

The present invention relates to email devices and/or email application software.

### BACKGROUND

This section introduces aspects that may be helpful in facilitating a better understanding of the invention. Accordingly, the statements of this section are to be read in this light and are not to be understood as admissions about what is in the prior art or what is not in the prior art.

Ever greater number of people own two or more email accounts. Having different email accounts help to compartmentalize one's own life: work, personal, spam, project, etc. Email devices, or email applications, are often configured to be able to send and receive emails across these many different email accounts.

However, there are problems associated with handling multiple email accounts in one place or on one device. One such problem is revealing one of multiple private email addresses to a recipient. For example, by addressing an email to a work colleague from a personal email account.

A solution is sought to address this situation.

### SUMMARY

In view of the foregoing, an embodiment herein provides for a method of sending an email message in an email processing application with which are registered at least two email accounts, comprising the steps of:
- receiving recipient identifiers to which will be addressed said email message;
- determining one of said email accounts as a sending account in function of said entered recipient identifiers; and
- sending said email message with said sending account.

An advantage of this embodiment is that the email device can save the user time, and improve privacy, by having the email device configured to associate a sender with given recipients.

This allows to speed up the email sending process by making email account selection more intuitive, and also overcomes lapses in attention to preserve privacy by making best-guesses on which is the most appropriate email account to use.

Another embodiment provides for a computer program product adapted to carry out the aforementioned method.

In yet another embodiment, there is provided an email device configured to compose and send emails to one or more recipients, said device comprising:
- a storage module adapted to store email contact information and associated sender account of two or more email accounts,
- user interface means for composing an email and specifying recipients identifiers,
- processing means adapted to search and tally corresponding email account for each of said entered recipient,
said processing means further adapted to define set a sending email account as the one corresponding to the majority tally of the corresponding email account.

These and other aspects of the embodiments herein will be better appreciated and understood when considered in conjunction with the following description and the accompanying drawings.

### BRIEF DESCRIPTION OF THE FIGURES

Figure 1 is a block diagram schematically illustrating an email server system according to an embodiment.
Figure 2 illustrates a part of the embodiment of figure 1.
Figure 3 illustrates a part of the embodiment of figure 1 in a variant.
Figure 4 illustrates an exemplary process of working the embodiment of figure 1.
Figure 5 illustrates an exemplary process of working the embodiment of figure 1.

### DETAILED DESCRIPTION OF EMBODIMENTS

The embodiments herein and the various features and advantageous details thereof are explained more fully with reference to the non-limiting embodiments that are illustrated in the accompanying, drawings and detailed in the following description. Descriptions of well known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the samples should not be construed as limiting the scope of the embodiments herein.

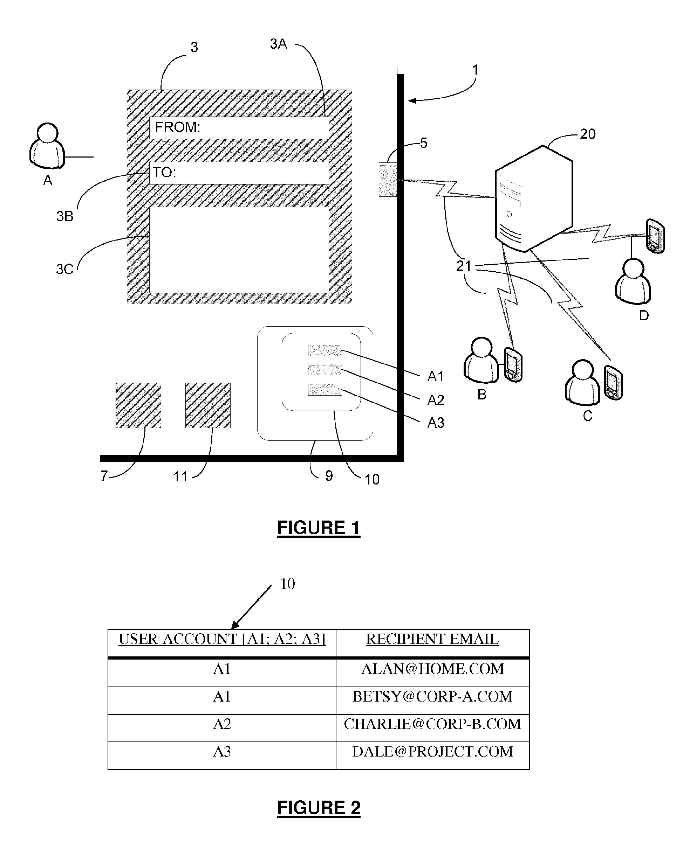

Figure 1 illustrates an email environment, and more particularly, it illustrates a user A associated with a device 1 configured for sending emails entered in by the user A, to a plurality of recipients B, C, D via an email server 20.

In the present embodiment, the user A has 2 or more email accounts readable from his/her device 1. An email account identifies an email box to which email messages are delivered. Email accounts are associated with an email address of the format: username@domain.com allowing for the routing of emails around email networks. The email accounts may be preprogrammed onto the device and allow user A to send email using an email account of his choosing.

The email accounts will be referred to and referenced as A1-A3, but there may be as few as two accounts, and as many as user A can manage.

The device 1 may for example be a fixed or mobile end-user terminal, in communication over a wired or wireless network with the email server 20 adapted to send said emails to the plurality of recipients B, C, D substantially simultaneously. The device 1 may for example be an Android® or iPhone® smartphone with an installed email client and whereon two or more email accounts are configured.

More particularly, the device 1 comprises for example the following components:
- a display 3,
- a network interface 5,
- a data entry module 7, such as a keyboard,
- a storage module 9, and
- a processor 11.

The display 3 is a means of graphical reproduction on the device 1, and provides for a user interface to the user A. The display permits displaying an email entry application providing for a plurality of entry fields adapted for sending emails. For example, display 3 is adapted to show:
- A text field 3A ("FROM"). If the device is configured with multiple email accounts, for example email accounts A1, A2, A3, then this field allows the user to manually select which account to use to send emails from.
- A text field 3B ("TO") adapted for specifying the destination of the email, in particular for entering the email address of recipients B, C, D
- A text field 3C ("MESSAGE") for entering a message from the user. This comprises the body of the email message.

The network interface 5 is a wired or wireless interface device adapted to allow email communication over one or more network 21 between the device 1 and the email server 20.

The storage module 9 is adapted for storing a contact list 10 locally in the device 1. The contact list 10 stored in the storage module 9 is a common database of contacts across two or more distinct user email accounts A1-A3. The contact list 10 comprises, amongst other fields, at least email addresses of recipients, but may also comprise names of recipients, physical addresses, and other notes. In a variant of the present embodiment, each contact in the contact list 10 is associated with a weight indicative of the importance of the contact.

The contact list 10 may be a unique instance of contacts that is stored only locally on the device, or indeed the contact list 10 may be a full or partial synchronization of contacts stored on the server 20. Furthermore, the contact list 10 spanning a plurality of accounts may be structured as a single database or may represent a plurality of contact databases for each email account A1-A3. However, the contact list is seamless to the user with respect to the plurality of email accounts A1-A3 if they may exist. As such, the user A, when selecting a recipient, may or may not be aware of which contact list 10 or of the email account the recipient is linked to. Indeed, there may also be cases where a recipient email address is common to many different email accounts.

The contact list 10 is illustrated in greater detail at figure 2, in which a listing of recipient email addresses and associated email account A1, A2, A3 is shown. It should be noted that each email account is linked to a particular sending user email address, and links to a particular email server for email processing, eg: account A1 is linked to sending address a_home@isp.com; account A2 is linked to a_work@company.com; account A3 is linked to a_project@club.com.

However, it should be further noted that each account A1 may have secondary accounts associated with it. For example, account A1 (a_home@isp.com) may have secondary email addresses of the form a_home+temporary@isp.com and/or a_home+shopping@isp.com. All secondary email addresses are nevertheless the same email account A1, and any email addressed to the primary email address (a_home@isp.com) or to any of the secondary email addresses will be managed by the same email account and the same email server. Such secondary email addresses may also be used to send from. In variants of the present embodiment, each secondary email address can correspond to a separate email account.

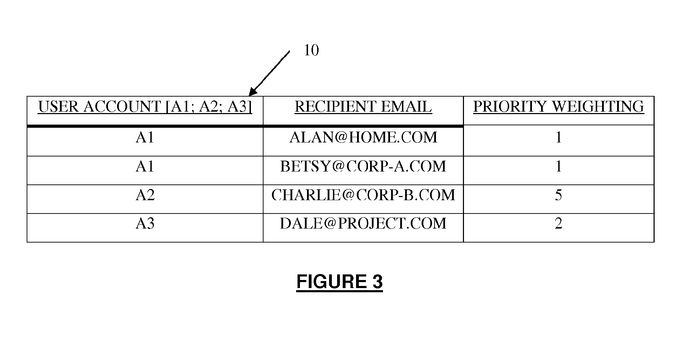

According to a variant, shown at figure 3, and detailed further herebelow, each recipient email may further be associated with a priority weighting, eg 1 to 5, with 5 being given the most weight. As such, a priority weight of 5 is given more importance and prominence in processing than, say, a priority weight of 1.

The processor 11 is adapted to send email messages entered in the email text fields 3C, using accounts A1-A3 corresponding to the FROM field 3A to recipients B-D as entered in the TO field 3B. Of course, this simply means processing the information entered into the appropriate format and sending it to email server 20 over the network interface 5.

The processor 11 is further adapted to look up an associated user account A1-A3 in the storage module 9 for each recipient B-D specified in the text field 3B.

The processor 11 is then further adapted to tally the user accounts A1-A3 associated with the entered recipients B-D. The processor 11 is further adapted to automatically choose as a sending email account A1-A3 the one having the highest tally.

In other words, the processor 11 goes through all the recipients in the to field 3B and tallies for each email address entered which of said email user accounts A1-A3 the email is associated with in the contact list. The user account A1-A3 with the highest tally is deemed to be the most privileged and the processor then sends the new email to the server 20 using this email account A1-A3. This user account to send from corresponds to the FROM field 3A.

It is to be noted that the selection of the user account A1-A3 may be performed dynamically as recipients are entered, or performed at the end when hitting the "send" button.

In a variant, the device requests confirmation of the user of the user account selected for sending.

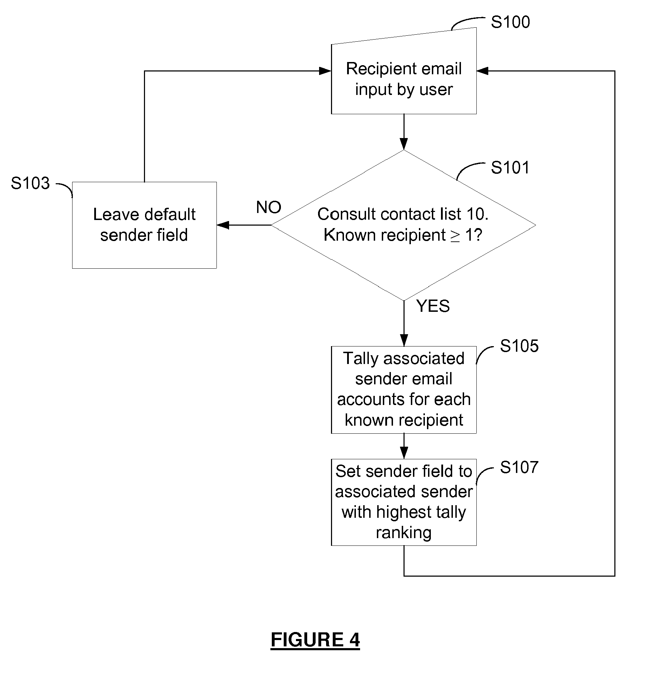

Figure 4 illustrates a call flow diagram of an embodiment.

At step S100, the user A of the device 1 enters his email message in the text field 3C of the device 1. At some point, user A enters the email addresses of the recipients in the TO field 3B. For example, the user A enters user B and C's email address in to recipient text field 3B.

Next, the processor 11 analyses (S 101) the recipients entered and looks up the contact list 10 to determine if they are known to the device 1.

If the processor determines at step S101 that all the recipients are unknown, then it does not select an originating email account (step S103), and may leave the default sending email account unchanged. The default email address may for example be predetermined by the user A.

If the processor 11 determines at step S101 that one or more of the recipients are known to user A, then, at step S105, for each recipient email address input by user A, the processor 11:
- Looks up in the contact list 10 in the storage module 9 for an associated sending email account
- Tallies the different sending accounts until all the recipient email addresses have been processed.

All unknown recipients are ignored.

At step S107, the processor sets the user email account ("FROM:" field 3A) to the user account with the highest tally at step S105.

In a variant of step S105, each recipient email address may be associated with a originating email account and a priority weighting, such that for each recipient email address input by user A, the processor 11:
- Looks up in the storage module 9 the appropriate contact list for an associated sending email account
- Looks up in the storage module 9 the appropriate contact list for an associated priority weighting factor
- Tallies the different sending accounts and their priority weighing level until all the recipient email addresses have been processed.

As such, a particular recipient address may be set with such an overwhelming weighting that it influences much more than other recipients the selection of the user account to send from.

According to a variant, the device 1 may be configured such that each recipient address entered in the 'to' field 3B and which is not previously stored in the storage module 9 is attributed to a default email account, with, if appropriate, a default weight.

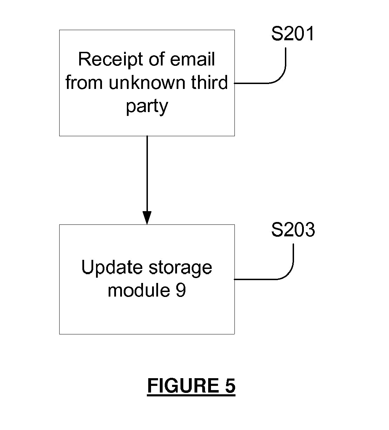

In yet another embodiment, illustrated at figure 5, it is possible to automatically populate the contact list in storage module 9 with associated user account by parsing received emails (step S201) for the associated sender and recipient, which may then be stored (step S203) in the contact list 10 with, respectively, the recipient and sender user account.

In yet another embodiment, rather than have an association between a particular user account A1-A3 and a particular email recipient (eg. Alan@home.com), the aforementioned device 1 could be configured to instead take into account the association between a user account A1-A3 and a domain only (eg. [*]@home.com). As such, all users of a particular domain server would be concerned. For example, any recipient in the "home.com" domain would gets associated with the A1 account, and all recipient in the "project.com" domain would get associated with the A3 account.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. Method of sending an email message in an email processing application with which are registered at least two email accounts, comprising the steps of:
- receiving recipient identifiers to which will be addressed said email message;
- determining one of said email accounts as a sending account in function of said entered recipient identifiers; and
- sending said email message with said sending account.

2. Method of claim 1, in which the step of determining the email accounts comprising the steps of:
- for each of said recipient identifiers, searching and tallying an associated preferred email sender account in a contact database;
wherein the sending account is determined in function of the majority tally of the preferred email sender account.

3. Method according to claim 2, wherein each recipient identifier is associated with a preferred email sender address and an associated weighted priority;
wherein the weights are tallied for each recipient identifier;
and wherein the sending account is determined in function of the majority tally of the weighted priority tally of the preferred email account

4. Method according to any one of the preceding claims, wherein the recipient identifier is the domain part of an email address.

5. Method according to any one of the preceding claims 1 to 3, wherein the recipient identifier is the email address.

6. A computer program product adapted to perform the method of any of the preceding claims 1 to 5.

7. An email device (1) configured to compose and send emails to one or more recipients (B, C, D), said device comprising:
- a storage module (9) adapted to store email contact information and associated sender account of two or more email accounts,
- user interface means (3; 7) for composing an email and specifying recipients identifiers,
- processing means (11) adapted to search and tally corresponding email account for each of said entered recipient,
said processing means (11) further adapted to define set a sending email account as the one corresponding to the majority tally of the corresponding email account.

8. Device according to claim 7, wherein the recipient identifier is the domain part of an email address.

9. Device according to claim 7, wherein the recipient identifier is the email address.
